**Europäisches Patentamt**

(19) **European Patent Office**

**Office européen des brevets**

(11) Numéro de publication: **0 132 171**

**B1**

(12) **FASCICULE DE BREVET EUROPÉEN**

(45) Date de publication du fascicule du brevet:
08.04.87

(21) Numéro de dépôt: **84401233.6**

(22) Date de dépôt: **15.06.84**

(51) Int. Cl.⁴: **B 60 R 1/00**

(54) **Dispositif de commande d'un miroir de rétroviseur extérieur de l'intérieur d'un véhicule.**

(30) Priorité: **13.07.83 FR 8311758**

(43) Date de publication de la demande:
**23.01.85 Bulletin 85/4**

(45) Mention de la délivrance du brevet:
**08.04.87 Bulletin 87/15**

(84) Etats contractants désignés:
**DE GB IT SE**

(56) Documents cité:
**EP-A-0 019 501**
**WO-A-83/01986**
**US-A-3 251 238**
**US-A-3 390 588**

**Le dossier contient des informations techniques présentées postérieurement au dépôt de la demande et ne figurant pas dans le présent fascicule.**

(73) Titulaire: **Manzoni, Stéphane, 1, rue Pasteur, F-39200 Saint- Claude (FR)**

(72) Inventeur: **Manzoni, Stéphane, 1, rue Pasteur, F-39200 Saint- Claude (FR)**

(74) Mandataire: **Moulines, Pierre, Cabinet BEAU de LOMENIE 55, rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention a pour objet un dispositif de commande d'un miroir de rétroviseur extérieur de l'intérieur du véhicule.

La demande de brevet européen n° 0 019 501 décrit un tel dispositif dont le rétroviseur comporte un organe de support du miroir monté pivotant suivant un premier axe (YY1) sur un croisillon monté pivotant suivant un second axe (XX1) perpendiculaire au premier axe (YY1) sur une embase solidaire du boîtier; un dispositif de commande interposé entre le croisillon et l'embase comprend un arbre qui, d'une part, est monté rotatif et coulissant dans des paliers ménagés dans le croisillon et, d'autre part, est relié à un câble de commande rotatif et susceptible de se déplacer axialement; le dispositif de commande coopère avec un premier moyen de guidage permettant de transformer la translation de l'arbre en un pivotement du croisillon autour de l'axe (YY1) et un deuxième moyen de guidage permettant de transformer la rotation de l'arbre en un pivotement du croisillon autour de l'axe (XX1).

Ce dispositif connu permet d'exécuter deux pivotements (XX1) et (YY1) du miroir, indépendants ou conjugués au moyen d'un seul câble de commande qui peut coulisser axialement et/ou tourner autour de son axe.

La présente invention vise à obtenir le même résultat. Mais, dans le dispositif connu précité, le montage de ses divers composants est relativement long, malcommode et coûteux; il ne peut être exécuté que par un personnel spécialisé ayant recours à des outillages et utilisant des pièces d'assemblage.

Dans le cadre général du résultat visé, la présente invention a pour but de concevoir des pièces qui soient moulables sans difficulté et de réaliser facilement et rapidement le montage desdites pièces par clipsage à l'aide d'une main d'oeuvre n'ayant pas de qualification particulière.

Dans ce but, et conformément à l'invention, outre les moyens précités, sur la face arrière de l'organe de support du miroir font saillie deux bras parallèles entre lesquels est engagé un bossage cylindrique faisant corps avec l'arbre, ces bras s'étendant entre deux bras du croisillon contigus à deux parois latérales de l'embase, l'invention résidant concomitamment en ce que l'arbre du bossage cylindrique est supporté par des paliers clipsables des bras du croisillon et des tétons du croisillon s'étendant suivant l'axe (XX1) parallèlement à cet arbre sont supportés par des paliers clipsables des parois latérales de l'embase, tandis que ledit bossage cylindrique porte contre une surface cylindrique de l'embase concentrique à l'axe (XX1).

Dans le même but, des tétons du croisillon s'étendant suivant l'axe (YY1) sont supportés par des paliers clipsables ménagés dans des pattes faisant saillie sur la face arrière de l'organe de support du miroir.

Par ailleurs, pour constituer le premier moyen de guidage, le bossage cylindrique présente à ses deux extrémités une partie hémisphérique qui est en contact avec une surface semi-cylindrique des bras prévus sur la face arrière du support de miroir, ces bras présentant des échancrures dans lesquelles se déplace l'arbre solidaire du bossage.

Pour constituer le deuxième moyen de guidage, suivant une première forme de réalisation, l'arbre est coaxial au bossage et présente à l'une de ses extrémités, au moins un pignon qui engrène avec un secteur denté ménagé sur l'une des parois latérales de l'embase, et suivant une deuxième forme de réalisation, l'axe du bossage est excentré par rapport à l'axe de l'arbre et le bossage est engagé entre deux ailes parallèles s'étendant perpendiculairement à la surface de l'embase.

D'autres caractéristiques et avantages de l'invention seront mieux compris à la lecture de la description qui va suivre de plusieurs mode de réalisation et en se référant aux dessins annexés sur lesquels:

- la figure 1 est une vue en coupe longitudinale d'un mode de réailsation du dispositif de commande d'un miroir de rétroviseur suivant l'invention;

- la figure 2 est une vue en coupe suivant la ligne II-II de la figure 1.

- les figures 3 et 3a sont des vues en coupe suivant la ligne III-III de la figure 1.

- la figure 4 est une vue en coupe longitudinale d'un autre mode de réalisation du dispositif de commande d'un miroir de rétroviseur suivant l'invention.

- la figure 5 est une vue en élévation du dispositif sans porte-glace suivant la flèche F2 de la figure 4.

- la figure 6 est une vue en élévation du porte-glace suivant la flèche F1 de la figure 4.

- les figures 7, 7a sont des vues en coupe suivant la ligne VII-VII de la figure 4.

- la figure 8 est une vue en coupe suivant la ligne VIII-VIII de la figure 4.

- la figure 9 est une vue en coupe transversale du croisillon.

- la figure 10 est une vue en coupe transversale de l'embase.

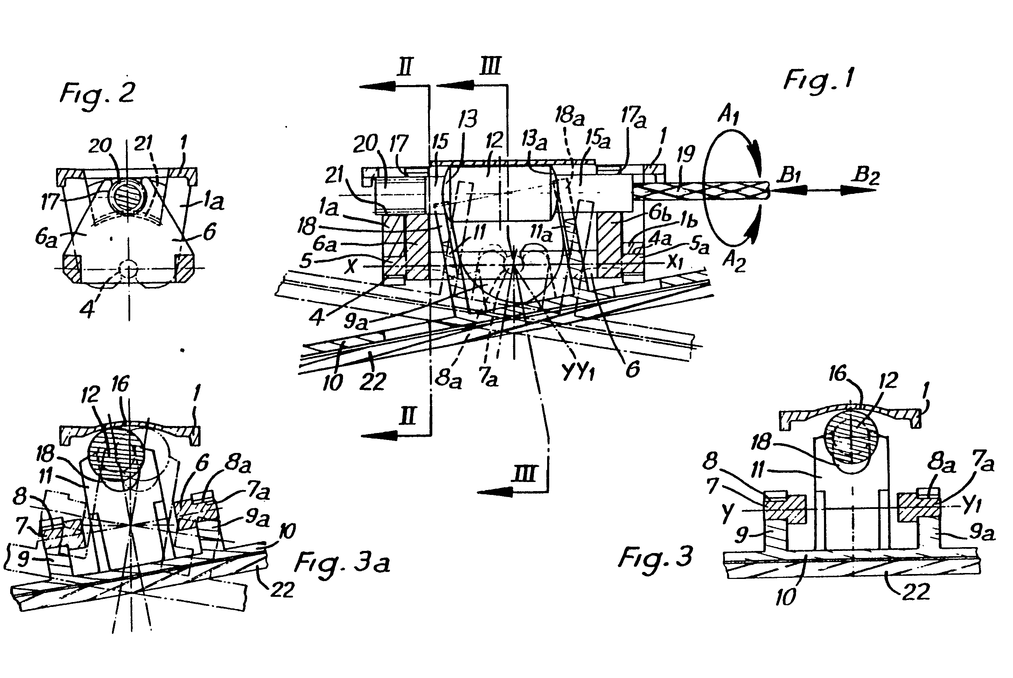

Aux figures 1, 2 et 3 on a représenté un mode de réalisation d'un dispositif de commande d'un miroir de rétroviseur actionné à partir d'un câble de manoeuvre se déplaçant en rotation suivant la double flèche A1, A2 et en translation suivant la double flèche B1, B2.

Le dispositif comprend une embase 1 qui comporte des pattes 2, 2a munies de trous 3, 3a (Fig.5.) dans lesquels sont engagés des organes de fixation pour le montage de l'embase sur le fond d'un boîtier non représenté au dessin.

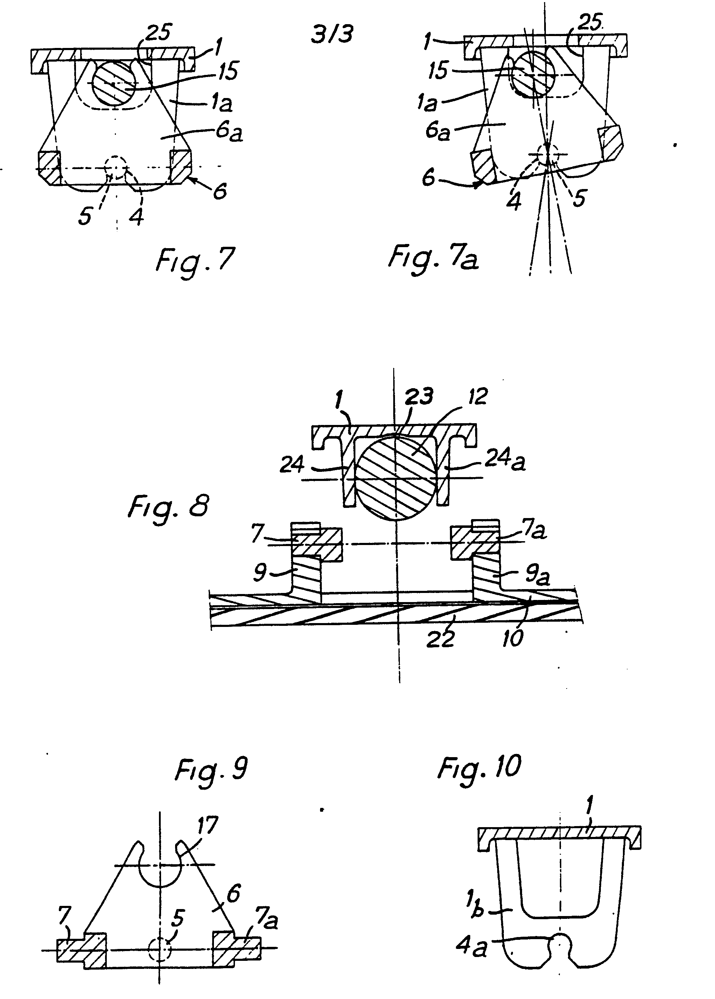

Sur la face avant de l'embase 1 s'étendent perpendiculairement à celle-ci des parois latérales 1a, 1b (Fig. 1 et 10) présentant des paliers 4, 4a clipsables dans lesquels sont montés pivotants des tétons cylindriques 5, 5a d'un croisillon 6 articulé sur l'embase suivant un axe horizontal XX1.

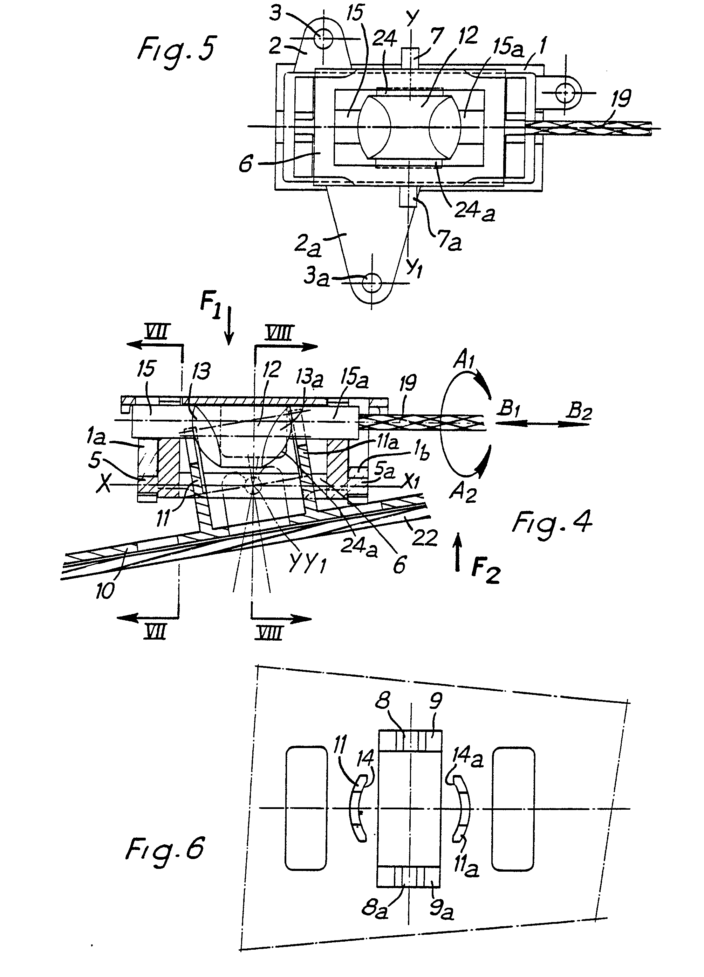

Suivant un axe vertical YY1 perpendiculaire à l'axe XX1, le croisillon 6 comporte deux têtons cylindriques 7, 7a qui sont montés pivotants dans des paliers 8, 8a clipsables ménagés respectivement dans des pattes 9, 9a (fig. 3) prévues sur la face arrière d'un organe de support 10 d'un miroir 22 de rétroviseur.

Cette disposition permet de monter le miroir 22 sur l'embase 1 de telle sorte que ledit miroir soit susceptible de se déplacer autour d'un axe horizontal XX1 et d'un axe vertical YY1.

Sur la face arrière de l'organe de support 10 du miroir il est prévu deux bras parallèles, 11, 11a, entre lesquels est engagé un bossage cylindrique 12 qui présente à ses deux extrémités des parties hémisphériques 13, 13a qui sont en contact avec des surfaces semi-cylindriques 14, 14a, (Fig. 6) prévues sur les bras 11, 11a. Le bossage cylindrique 12 qui est solidaire d'un arbre en deux parties 15, 15a dont l'axe est parallèle à l'axe XX1, et coaxial au bossage est maintenu en contact avec une surface cylindrique 16 ménagée sur le fond de l'embase 1.

Les deux parties 15, 15a de l'arbre sont montées rotatives et coulissantes axialement dans des paliers 17, 17a clipsables ménagés dans des bras 6a, 6b, du croisillon 6, et les bras 11, 11a présentent respectivement des échancrures 18, 18a dans lesquelles sont engagés les parties 15, 15a de l'arbre solidaire du bossage 12.

A l'une des extrémités de la partie 15a de l'arbre est fixé par l'une de ses extrémités un câble de manoeuvre 19 actionné en rotation suivant la double flèche A1, A2 et en translation suivant la double flèche B1, B2.

L'autre partie 15 de l'arbre est prolongée par un pignon 20 qui engrène avec un secteur denté 21 (Fig. 2) ménagé dans l'une des parois latérales 1a de l'embase 1.

Le dispositif de commande représenté aux figures 1, 2 et 3 fonctionne de la manière suivante.

Lorsqu'on exerce une poussée ou une traction sur le câble 19, celui-ci se déplace suivant la double flèche B1, B2 et il entraîne en translation le bossage 12 guidé par les parties 15, 15a de l'arbre qui coulissent dans les paliers 17, 17a.

Le déplacement longitudinal du bossage 12 qui est prisonnier entre les bras 11, 11a provoque le déplacement du porte-miroir 10 autour des têtons 7, 7a, du croisillon 6 et par suite autour de l'axe vertical YY1, de telle sorte qu'il en résulte un mouvement gauche-droit du miroir 22 (Fig. 1).

Lorsqu'on actionne le câble 19 en rotation suivant la double flèche A1, A2, on entraîne en rotation l'arbre 15, 15a, le bossage 12 et le pignon 20 solidaire de la partie 15 de l'arbre. Le pignon 20 étant en prise avec le secteur denté 21 de l'embase fixe, il en résulte par réaction, un pivotement du croisillon 6 par ses têtons 5, 5a dans les paliers 4, 4a et de ce fait un pivotement du miroir 22 autour de l'axe horizontal XX1.

Ce pivotement permet un déplacement ciel-terre du miroir à la suite d'une rotation du câble suivant la flèche A1, A2 (Fig. 3).

Aux figures 4 à 8, on a représenté un autre mode de réalisation du dispositif de commande suivant l'invention dans lequel le bossage cylindrique 12 est excentré par rapport aux deux parties 15, 15a de l'arbre dont il est solidaire.

Par ailleurs, le bossage 12 qui est en appui contre la surface 23 de l'embase 1 est engagé entre deux ailes parallèles 24, 24 a (Fig. 4, 5 et 6) s'étendant perpendiculairement à la surface de l'embase 1.

Il en résulte que le pignon 20 et le secteur denté 21 ont été supprimés et que l'extrémité de la partie 15 de l'arbre solidaire du bossage 12 est engagée dans un trou oblong 25 ménagé dans l'une des parois latérales 1a, de l'embase.

Lorsqu'on exerce une poussée ou une traction sur le câble 19 suivant la double flèche B1, B2, on agit comme décrit précédemment sur le bossage 12 qui est entraîné en translation et assure la rotation du support de miroir 10 autour de l'axe vertical YY1 de telle sorte qu'il en résulte un mouvement gauche-droit du miroir 22 (Fig.4)

Lorsqu'on actionne en rotation le câble 19 suivant la double flèche A1, A2, on entraîne en rotation l'arbre 15, 15a et par suite le bossage 12 qui est maintenu entre les ailes 24, 24a de l'embase.

Les parties 15, 15a de l'arbre étant excentrées par rapport à l'axe du bossage 12, il en résulte un déplacement angulaire des parties 15, 15a de l'arbre et un entraînement du croisillon 6, par ses têtons 5, 5a, autour de l'axe horizontal XX1.

Le miroir 22 étant solidaire du croisillon 6, il se déplace suivant un mouvement ciel-terre.

## Revendications

Dispositif de commande d'un miroir de rétroviseur extérieur de l'intérieur d'un véhicule, ledit rétroviseur comportant un organe (10) de support du miroir (22) monté pivotant suivant un premier axe (YY1) sur un croisillon (6) monté pivotant suivant un second axe (XX1) perpendiculaire au premier axe (YY1) sur une embase (1) solidaire du boîtier, un dispositif de commande interposé entre le croisillon et l'embase comprenant un arbre (15, 15a) qui, d'une part, est monté rotatif et coulissant dans des paliers ménagés dans le croisillon (6), et d'autre part, est relié à un câble de commande rotatif (19) et susceptible de se déplacer axialement, ledit dispositif de commande coopérant avec un premier moyen de guidage permettant de transformer la translation de l'arbre en un pivotement du croisillon autour de l'axe (YY1) et un deuxième moyen de guidage permettant de transformer la rotation de l'arbre en un pivotement du croisillon autour de l'axe (XX1),

caractérisé en ce que l'arbre (15, 15a) est supporté par des paliers clipsables (17, 17a) prévus dans deux bras (6a, 6b) du croisillon (6) contigus à deux parois latérales (1a, 1b) de l'embase (1), cependant que des tétons (5, 5a) du croisillon (6), s'étendant suivant l'axe (XX1) parallèlement à cet arbre, sont supportés par des paliers clipsablas (4, 4a) des parois latérales (1a, 1b) de l'embase et que des tétons (7, 7a) du croisillon (6) s'étendant suivant l'axe (YY1) sont supportés par des paliers clipsables (8, 8a) ménagés dans des pattes (9, 9a) faisant saillie sur la face arrière de l'organe (10) de support du miroir (22).

2.- Dispositif selon la revendication 1, caractérisé en ce que sur la face arrière de l'organe de support (10) du miroir (22) font saillie deux bras parallèles (11, 11a) entre lesquels est engagé un bossage cylindrique (12) faisant corps avec l'arbre (15, 15a), ces bras (11, 11a) s'étendant entre les deux bras (6a, 6b) du croisillon (6).

3.- Dispositif selon la revendication 2, caractérisé en ce que le bossage cylindrique (12) porte contre une surface cylindrique (16; 23), de l'embase 1 concentrique à l'axe (XX1).

4.- Dispositif selon la revendication 2 ou 3, caractérisé en ce que, pour constituer le premier moyen de guidage, le bossage cylindrique (12) présente à ses deux extrémités une partie hémisphérique (13, 13a) qui est en contact avec les surfaces en regard semi-cylindriques (14, 14a) des bras (11, 11a), ces bras présentant des échancrures (18, 18a) dans lesquelles se déplace l'arbre (15, 15a) solidaire du bossage (12).

5.- Dispositif selon la revendication 2 ou 3, caractérisé en ce que, pour constituer le deuxième moyen de guidage, l'arbre (15, 15a) est coaxial au bossage (12) et présente à l'une de ses extrémités, au moins un pignon (20) qui engrène avec un secteur denté (21) ménagé sur l'une des parois latérales (1a) de l'embase (1).

6.- Dispositif selon la revendication 3, caractérisé en ce que, pour constituer le deuxième moyen de guidage, l'axe du bossage (12) est excentré par rapport à l'axe de l'arbre (15, 15a) et le bossage (12) est engagé entre deux ailes parallèles (24, 24a) s'étendant perpendiculairement à la surface de l'embase (1).

7.- Dispositif suivant la revendication 6, caractérisé en ce que les extrémités de l'arbre (15, 15a) sont engagées dans un trou oblong (25) ménagé dans les parois latérales (1a, 1b) de l'embase 1.


**Patentansprüche:**

1. Vorrichtung zum Steuern eines Außen-Rückspiegels vom Inneren eines Fahrzeugs, welcher Rückspiegel ein Halterungsorgan (10) für den Spiegel (22) umfaßt, welches schwenkbar um eine erste Achse (YY1) auf einem Kreuzstück (6) montiert ist, welches schwenkbar um eine zweite, zur ersten Achse (YY1) senkrechte Achse (XX1) auf einer mit dem Gehäuse verbundenen Befestigungsplatte (1) montiert ist, wobei eine Steuereinrichtung zwischen dem Kreuzstück und der Befestigungsplatte eingesetzt ist und eine Welle (15, 15a) umfaßt, die einerseits drehbar und gleitend in im Kreuzstück (6) vorgesehenen Lagern gelagert und anderseits mit einem drehbaren und axial verschiebbaren Steuerkabel (19) verbunden ist, welche Steuereinrichtung mit einem ersten Führungsmittel, das die Umsetzung der Verschiebung der Welle in ein Verschwenken des Kreuzstücks um die Achse (YY1) ermöglicht, und mit einem zweiten Führungsmittel, das die Umsetzung der Rotation der Welle in ein Verschwenken des Kreuzstücks um die Achse (XX1) ermöglicht, zusammenwirkt, dadurch gekennzeichnet, daß die Welle (15, 15a) von einrastbaren Lagern (17, 17a) getragen ist, die in zwei an zwei Seitenwänden (1a, 1b) der Befestigungsplatte (1) anstoßenden Armen (6a, 6b) des Kreuzstücks vorgesehen sind, wobei Zapfen (5, 5a) des Kreuzstücks (6), die sich gemäß der Achse (XX1) parallel zu dieser Welle erstrecken, von einrastbaren Lagern (4, 4a) der Seitenwände (1a, 1b) der Befestigungsplatte getragen sind, und daß Zapfen (7, 7a) des Kreuzstücks (6), die sich gemäß der Achse (YY1) erstrecken, von einrastbaren Lagern (8, 8a) getragen sind, die in von der Rückseite des Halterungsorgans (10) des Spiegels (22) auskragenden Konsolen (9, 9a) vorgesehen sind.

2. Vorrichtung nach Anspruch 1, dadurch gekennzeichnet, daß von der Rückseite des Halterungsorgans (10) des Spiegels (22) zwei parallele Arme (11, 11a) auskragen, zwischen denen ein mit der Welle (15, 15a) einstückiger zylindrischer Wulst (12) eingesetzt ist, wobei sich die Arme (11, 11a) zwischen den Armen (6a, 6b) des Kreuzstücks (6) erstrecken.

3. Vorrichtung nach Anspruch 3, dadurch gekennzeichnet, daß der zylindrische Wulst (12) an einer Zylinderfläche (16; 23) der Befestigungsplatte 1 konzentrisch zur Achse (XX1) anliegt.

4. Vorrichtung nach Anspruch 2 oder 3, dadurch gekennzeichnet, daß zur Bildung des ersten Führungsmittels der zylindrische Wulst (12) an seinen beiden Enden einen halbkugelförmigen Teil (13, 13a) aufweist, der mit den gegenüberliegenden halbzylinderförmigen Flächen (14, 14a) der Arme (11, 11a) in Kontakt steht, wobei diese Arme Ausnehmungen (18, 18a) aufweisen, in welchen sich die mit dem Wulst (12) verbundene Welle (15, 15a) bewegt.

5. Vorrichtung nach Anspruch 2 oder 3, dadurch gekennzeichnet, daß zur Bildung des zweiten Führungsmittels die Welle (15, 15a) koaxial zum Wulst (12) verläuft und an einem ihrer Enden mindestens ein Ritzel (20) aufweist, das in einen an einer der Seitenwände (1a) der Befestigungsplatte (1) vorgesehenen gezahnten Abschnitt eingreift.

6. Vorrichtung nach Anspruch 3, dadurch gekennzeichnet, daß zur Bildung des zweiten Führungsmittels die Achse des Wulstes (12) in bezug auf die Achse der Welle (15, 15a) exzentrisch ist und der Wulst (12) zwischen zwei parallelen Flügeln (24, 24a), die sich senkrecht zur Oberfläche der Befestigungsplatte (1) erstrecken, eingesetzt ist.

7. Vorrichtung nach Anspruch 6, dadurch gekennzeichnet, daß die Enden der Welle (15, 15a) in einem in den Seitenwänden (1a, 1b) der Befestigungsplatte (1) vorgesehenen Langloch (25) eingreifen.

**Claims**

1. A device for controlling an outside rearview mirror from inside a vehicle, said rearview mirror comprising a member (10) for supporting the mirror (22) mounted for pivoting about a first axis (YY1) on a spider (6) mounted for pivoting about a second axis (XX1) perpendicular to the first axis (YY1) on a base (1) integral with the casing, a control device intercalated between the spider and the base comprising a shaft (15, 15a) which on the one hand, is mounted for rotating and sliding in bearings made in the spider (6), and on the other hand is connected to a rotatable control cable (19) and adapted to move axially, said control device cooperating with a first guiding means permitting to convert the translation of the shaft into a pivoting of the spider about the axis (YY1) and a second guiding means permitting to convert the rotation of the shaft into a pivoting of the spider about the axis (XX1), characterized in that the shaft (15, 15a) is supported by lockable bearings (17, 17a) provided in two side pieces (6a, 6b) of the spider (6) contiguous to two lateral walls (1a,1b) of the base (1), whereas lugs (5, 5a) of the spider (6), extending along the axis (XX1) in parallel to said shaft, are supported by lockable bearings (4, 4a) of the lateral walls (1a, 1b) of the base, and in that lugs (7, 7a) of the spider (6) extending along the axis (YY1) are supported by lockable bearings (8, 8a) made in tabs (9, 9a) projecting on the rear face of the member (10) supporting the mirror (22).

2. Device according to claim 1, characterized in that on the rear face of the member (10) supporting the mirror (22) two parallel arms (11, 11a) project and between which is engaged a cylindrical boss (12) which is an integral part of the shaft (15, 15a), said arms (11, 11a) extending between said two side pieces (6a, 6b) of the spider (6).

3. Device according to claim 2, characterized in that the cylindrical boss (12) abuts against a cylindrical surface (16; 23) of the base 1 which is concentric to axis (XX1).

4. Device according to claim 2 or 3, characterized in that, in order to constitute the first guiding means, the cylindrical boss (12) has at its two ends a hemispherical portion (13, 13a) which is in contact with the semi-cylindrical opposite surfaces (14,14a) of the arms (11, 11a), said arms having notches (18, 18a) in which the shaft (15) integral with the boss (12) moves.

5. Device according to claim 2 or 3, characterized in that, in order to constitute the second guiding means, the shaft (15, 15a) is coaxial to the boss (12) and has at one of its ends, at least a pinion (20) which meshes with a toothed sector (21) located in one of the lateral walls (1a) of the base (1).

6. Device according to claim 3, characterized in that in order to constitute the second guiding means, the axis of the boss (12) is eccentric with respect to the axis of the shaft (15, 15a) and the boss (12) is positioned between two parallel flanges (24, 24a) extending perpendicularly to the surface of the base (1).

7. Device according to claim 6, characterized in that the ends of the shaft (15, 15a) are engaged into an oblong slot (25) made in the lateral walls (1a, 1b) of the base (1).

Fig. 2

Fig. 1

Fig. 3a

Fig. 3

0 132 171

Fig. 5

Fig. 4

Fig. 6

Fig. 7

Fig. 7a

Fig. 8

Fig. 9

Fig. 10